# EUROPÄISCHE PATENTSCHRIFT

(11) **EP 0 792 789 B1**
(45) Veröffentlichungstag und Bekanntmachung des Hinweises auf die Patenterteilung: **15.03.2000**
(21) Anmeldenummer: 97100431.2
(22) Anmeldetag: 14.01.1997
(51) Int. Cl.: B62D 33/06

(54) **Lastkraftwagen mit gefedert gelagertem, nach vorn kippbarem Fahrerhaus**
Truck with a forward tilting, elastically suspended cab
Camion avec cabine basculant sur l'avant avec mécanisme de pivotement suspendu élastiquement

(30) Priorität: 27.02.1996 AT 36596
(43) Veröffentlichungstag der Anmeldung: 03.09.1997
(73) Patentinhaber: STEYR NUTZFAHRZEUGE AG, A-4400 Steyr (AT)
(72) Erfinder: Schönegger-Fösleitner, Erich, 4400 Steyr (AT)

(56) Entgegenhaltungen:
- US-A- 4 043 584
- US-A- 4 438 970

## Beschreibung

Die Erfindung betrifft einen Lastkraftwagen mit nach vorne kippbarem Fahrerhaus und weiteren Merkmalen wie im Oberbegriff des Anspruchs 1 angegeben.

Bei bekannten serienmäßigen Lastkraftwagen der Frontlenkerbauart wurden deren kippbare Fahrerhäuser bisher grundsätzlich über eine symmetrische Vier-Punkt-Lagerung am Fahrgestell gelagert, und zwar mittels zweier vorderer und zweier hinterer Lagerungen. Jede der hinteren Lagerungen wurde in der Regel durch ein Federbein realisiert, das unten am Rahmen angeschlossen ist und oben mit einem Verschlußorgan, in der Regel einem Verschlußhaken, an einem fahrerhausrückseitigen Lagerorgan, z. B. einen Bolzen angreift, das gleichzeitig auch das Gegenstück des Verschlusses bildet. Solche Vier-Punkt-Lagerungen sind beispielsweise auch aus der EP 0 184 667 B1 oder der DE 30 33 395 A1 bekannt. Die Anzahl der Lagerungen und deren Gestaltung bestimmen letztendlich den Preis und die Qualität der Fahrerhauslagerung.

Ferner ist aus der US 4,438,970 A ein Lastkraftwagen bekannt, der dem Oberbegriff des Anspruchs 1 entspricht, dessen Fahrerhaus hinten mittig an einer Halterung lösbar angeschlossen ist, die den Fahrgestell-Rahmen quer vollständig überbrückt. Dabei ist diese brückenartige Halterung an ihrem einen Ende ortsfest und damit exakt quergeführt über einen Lagerbock an einem der beiden Rahmenlängsträger gelagert. An ihrem anderen Ende dagegen ist diese brückenartige Halterung über ein Feder-Dämpfer-Organ gegenüber dem anderen der beiden Rahmenlängsträger abgestützt. Diese Lösung ist jedoch nicht bei Fahrerhäusern anwendbar, unterhalb deren Motortunnel das nach hinten herausragende Antriebsaggregat angeordnet ist.

Des weiteren sei noch eine aus der US 4,043,584 A bekannte Lagerung für die Fahrerkabine eines Traktors erwähnt, die aus mehreren nach Art eines Parallelogrammes angeordneten Führungslenkern besteht, die einen Halter führen, an dem die Fahrerkabine mittig abgestützt ist. Auch diese Lösung wäre bei Fahrerhäusern mit Motortunnel und darunter angeordnetem Antriebsaggregat nicht verwendbar.

Es ist daher Aufgabe der Erfindung, bei einem Lastkraftwagen für dessen kippbares Fahrerhaus eine hintere Lagerung anzugeben, die eine einfachere und billigere Fahrerhauslagerung, ohne Lagerungs- und Federungsqualitätseinbußen, ermöglicht.

Diese Aufgabe ist bei einem Lastkraftwagen der gattungsgemäßen Art erfindungsgemäß durch die im Kennzeichen des Anspruchs 1 angegebene Art der hinteren Fahrerhauslagerung gelöst.

Darüber hinaus gestattet diese Fahrerhauslagerung den Einbau eines gegebenenfalls nach hinten herausragenden Antriebsaggregates unterhalb des Fahrerhauses.

Das Prinzip der erfindungsgemäßen Lösung besteht darin, die hintere, mittig an der Fahrerhausrückseite angeordnete Lagerstelle am oberen Ende eines einzigen Federbeines anzuschließen, das mit einer außermittigen Stelle des Fahrgestell-Rahmens verbunden ist. Die hintere Fahrerhaus-Lagerung wird mithin durch ein speziell ausgebildetes und speziell angelenktes sowie befestigtes Federbein dargestellt, was gegenüber den eingangs erwähnten herkömmlichen Vier-Punkt-Lagerungen den Verzicht auf die Teile einer Lagerstelle bedeutet. Die Erfindung erschöpft sich jedoch nicht im Verzicht bzw. in der Weglassung dieser vierten Lagerstelle, denn solches würde eine einseitige hintere Lagerung des Fahrerhauses mit relativ starken Verwindungen und Verschränkungen während des Fahrbetriebes bedeuten. Vielmehr werden die bisher zwei fahrerhausrückseitigen Lagerstellen in einer nun mittig (bezogen auf die Fahrzeuglängsmittelhochebene) angeordneten Lagerstelle zusammengefaßt, gleichzeitig aber aufgrund der Ausgestaltung und Anlenkung des einzigen Federbeines sichergestellt, daß das Fahrerhaus trotzdem im Fahrbetrieb keinen Kräften unterliegt, die zu Verschränkungen oder Verwindungen führen könnten. Letzteres wird durch das exakt aufeinander abgestimmte Zusammenwirken der miteinander verbundenen Einzelteile des erfindungsgemäßen Federbeines sichergestellt.

Vorteilhafte Ausgestaltungen und Weiterbildungen der erfindungsgemäßen Lösung sind in den Unteransprüchen angegeben, wobei zwecks Vermeidung von Wiederholungen auf deren Texte verwiesen ist.

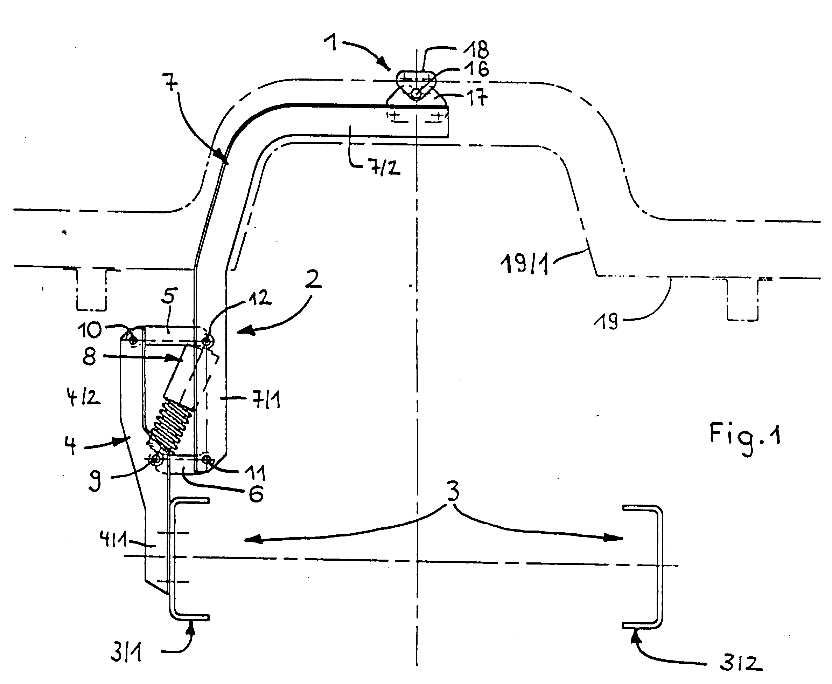

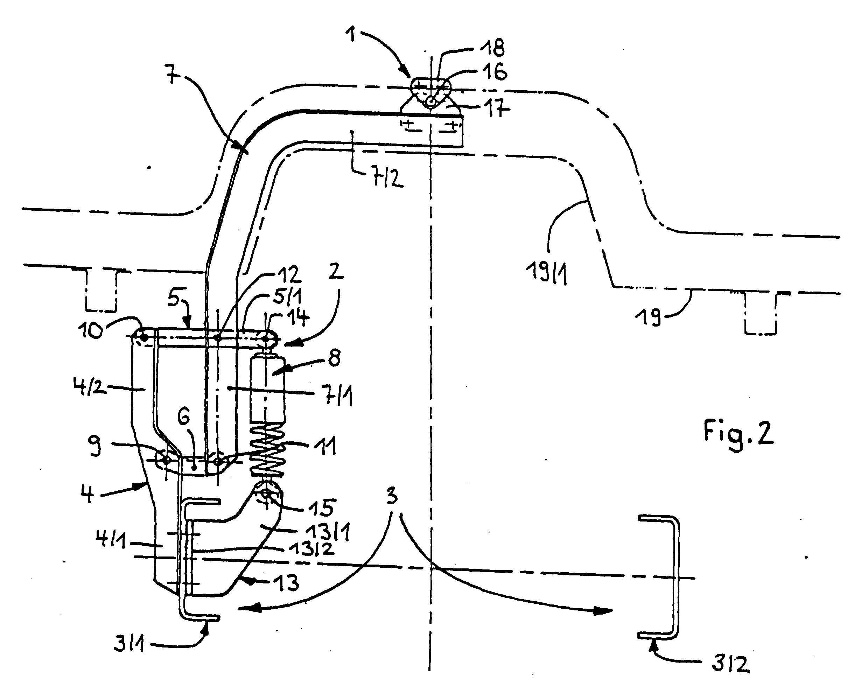

Nachstehend ist die erfindungsgemäße Lösung anhand zweier in Fig. 1 und 2 der Zeichnung dargestellter Ausführungsbeispiele noch näher erläutert. In den Figuren sind gleiche bzw. einander entsprechende Teile mit gleichen Bezugszeichen angezogen.

In der Zeichnung ist auf die Darstellung des Lastkraftwagen und des gesamten kippbaren Fahrerhauses sowie dessen vordere Lagerung verzichtet, da der Aufbau dieser Teile bekannt und an sich beliebig ist. Erwähnt sei nur, daß für die vordere Lagerung des Fahrerhauses üblicherweise zwei gleiche Lagerorgane zur Anwendung kommen, von denen jedes die gelenkige Verbindung zwischen einem der beiden Rahmenlängsträger des Fahrgestell-Rahmens und dem Fahrerhausboden herstellt.

Bei der erfindungsgemäßen Lösung wird der dritte Lagerpunkt der symmetrischen Drei-Punkt-Lagerung durch eine hintere, mittig an der Fahrerhausrückseite gegebene Lagerstelle 1 gebildet. Diese ist über ein einziges, in den Fig. 1 und 2 insgesamt mit 2 bezeichnetes Federbein mit einer außermittigen Stelle des Fahrgestell-Rahmens 3 verbunden.

Nachfolgend ist auf Einzelheiten der Ausführungsform des Federbeins gemäß Fig. 1 näher eingegangen. Das dort dargestellte Federbein 2 setzt sich aus mehreren Teilen zusammen, nämlich einem Halter 4, einer oberen Führungsschwinge 5, einer unteren Führungsschwinge 6, einem oben abgewinkelten galgenartigen Tragarm 7 und einem Feder-Dämpfer-Organ 8. Der Halter 4 ist dabei mit seinem unteren Abschnitt 4/1 an der Außenseite eines der beiden Rahmenlängsträger 3/1 bzw. 3/2 abgestützt und befestigt. An seinem hochragenden und den Längsträger 3/1 bzw. 3/2 überragenden Abschnitt 4/2 sind in zwei voneinander ein größeres Maß beabstandeten Lagerstellen 9, 10 die beiden Führungsschwingen 5, 6 einenendes voneinander beabstandet schwenkbar gelagert. Andernendes sind die beiden Führungsschwingen 5, 6 in Lagerstellen 11, 12 schwenkbar gelagert, die im unteren Bereich des vertikalen Teils 7/1 des galgenförmigen Tragarmes 7 vertikal voneinander beabstandet gegeben sind. Dabei liegen bei ungekipptem, normalbelastetem Fahrerhaus, die oberen Lagerstellen 10, 12 und unteren Lagerstellen 9, 11 jeweils in einer Querebene, die zur anderen parallel liegt, so daß auch die beiden Führungsschwingen 5, 6 parallel geführt sind. Der Querabstand der beiden unteren Lagerstellen 9, 11 ist vorzugsweise um ein solches Maß kleiner als der Querabstand der oberen Lagerstellen 10, 12, daß der Tragarm 7 beim Ein- und Ausfedern des Fahrerhauses eine seiner Vertikalbewegung überlagerte leichte Kippbewegung solcher Größe in Querrichtung aufgeprägt bekommt, daß der geringfügige seitliche Versatz des unteren Tragarm-Bereiches 7/1 durch das Kippen des oberen Tragarm-Bereiches in Gegenrichtung ausgeglichen wird und so die Lagerstelle 1 am Fahrerhaus zusammen mit dem weiter hinten noch näher erläuterten tragarmseitigen Verschlußgegenstück 17 immer nur vertikale Bewegungen in der Fahrzeuglängsmittelhochebene vollführen kann. Zur Begrenzung und Dämpfung der rückwärtigen Fahrerhaus-Bewegungen dient das Feder-Dämpfer-Organ 8. Dieses ist im Fall von Fig. 1 diagonal im Parallelogramm der Führungsschwingen 5, 6 angeordnet und dabei einerseits oben an der tragarmseitigen Lagerstelle 12 und andererseits unten an der halterseitigen Lagerstelle 9 angelenkt.

Nachfolgend ist auf Einzelheiten der Ausführungsform des Federbeines 2 gemäß Fig. 2, soweit von jener gemäß Fig. 1 unterschiedlich, näher eingegangen. Ein wesentlicher Unterschied besteht in einer anderen Art der Anlenkung des Feder-Dämpfer-Organs 8, was gegenüber Fig. 1 das Vorsehen eines Stützbockes 13 und eine verlängerte obere Führungsschwinge 5 bei gleichem Halter 4, Feder-Dämpfer-Organ 8 und Tragarm 7 bedeutet. Dabei ist das Feder-Dämpfer-Organ 8 etwas beabstandet und im wesentlichen parallel neben dem vertikalen Abschnitt 7/1 des Tragarmes 7 angeordnet und oben an einer außen am einwärts verlängerten Abschnitt 5/1 der oberen Führungsschwinge 5 gegebenen Lagerstelle 14 sowie unten an einer Lagerstelle 15 angelenkt, die an einem seitlich auskragenden Teil 13/1 des mit einem Flansch 13/2 innenseitig am selben Rahmenlängsträger 3/1 bzw. 3/2 wie der Halter 4 angeschlossenen und befestigten Stützbockes 13 gegeben ist.

Bei beiden Ausführungsformen gemäß Fig. 1 und 2 sind am oberen Ende des Federbeines 2, dort am freien Ende des Querabschnittes 7/2 des galgenförmigen Tragarmes 7 oben, und an der fahrerhausrückwandseitigen Lagerstelle 1 die Teile eines Verschlusses - einerseits ein Bolzen 16, andererseits ein lösbarer Verschlußhaken 17 - angeordnet. Der Bolzen 16 ist in Fahrzeuglängsrichtung verlaufend in einem an der Fahrerhaus-Rückwand angeschlossenen Bock 18 gegeben und bildet zusammen mit diesem im dargestellten Fall die Lagerstelle 1. Der Verschlußhaken 17 ist am Tragarm 7 zusammen mit einer entsprechenden Halterungs-/Öffnungs- und Schließvorrichtung gegeben, die nicht näher dargestellt ist.

Der Tragarm 7 folgt im oberen Teil seines Vertikalabschnittes und mit seinem Querabschnitt 7/2 der Kontur des Fahrerhausbodens 19 und dort insbesondere dessen Motordom 19/1 angepaßt.

## Patentansprüche

1. Lastkraftwagen mit nach vorne kippbarem Fahrerhaus, das über zwei vordere Lagerstellen und eine hintere, mittig an der Fahrerhausrückseite angeordnete Lagerstelle (1) gefedert mit dem Fahrgestell-Rahmen (3) verbunden ist, wobei die hintere Lagerstelle (1) lösbar an einer Halterung angeschlossen ist, die einseitig über ein Feder-Dämpfer-Organ gegenüber dem Fahrgestell-Rahmen abgestützt ist, dadurch gekennzeichnet, daß die Halterung durch ein einziges Federbein (2) gebildet ist, das sich aus einem Halter (4), einer oberen Führungsschwinge (5), einer unteren Führungsschwinge (6), einem oben abgewinkelten galgenartigen Tragarm (7) und einem Feder-Dämpfer-Organ (8) zusammengesetzt und daß hierbei
- der Halter (4) mit seinem unteren Abschnitt (4/1) an einem der beiden Rahmenlängsträger (3/1 bzw. 3/2) abgestützt befestigt ist und oberhalb des letzteren an seinem hochragenden Abschnitt (4/2) über zwei voneinander beabstandete Lagerstellen (9, 10) die untere Führungsschwinge (6) und die obere Führungsschwinge (5) jeweils einenendes lagert,
- an den beiden quer und parallel zueinander verlaufend angeordneten Führungsschwingen (5, 6) der galgenförmige Tragarm (7) mit seinem vertikalen Abschnitt (7/1) über zwei voneinander entsprechend beabstandete Lagerstellen (11, 12) angelenkt ist,
- am oberen Ende dieses Federbeines (2), dort am freien Ende des Tragarm-Querabschnittes (7/2) das Fahrerhaus mit seiner hinteren Lagerstelle (1) lösbar angeschlossen ist,
- die Vertikalbewegungen des Federbein-Tragarmes (7) gegenüber dem Fahrgestell-Rahmen (3) mittels des zwischengeschalteten Feder-Dämpfer-Organs (8) begrenzbar sind.

2. Lastkraftwagen nach Anspruch 1, dadurch gekennzeichnet, daß der Halter (4) mit seinem unteren Abschnitt (4/1) an der Außenseite eines der beiden Rahmenlängsträger (3/1 bzw. 3/2) abgestützt befestigt ist, daß ferner die obere (12) der beiden Lagerstellen (11, 12) am Tragarm (7) und die untere (9) der beiden Lagerstellen (9, 10) am Halter (4) durch das das Parallelogramm der Führungsarme (5, 6) diagonal querende Feder-Dämpfer-Organ (8) verbunden und aufgrund dieser Anlenkungsart nur exakt geführte Ein- und Ausfederbewegungen des Fahrerhauses mit entsprechend begrenztem Hub möglich sind.

3. Lastkraftwagen nach Anspruch 1, dadurch gekennzeichnet, daß ein Stützbock (13) vorgesehen ist, der innenseitig am selben Rahmenlängsträger (3/1 bzw. 3/2) wie der Halter (4) abgestützt und angeschlossen ist, daß außerdem die obere Führungsschwinge (5) über die Lagerstelle (12) am Tragarm (7) seitlich hinaus verlängert ist, und daß am seitlich vorstehenden Teil (5/1) der Führungsschwinge (5) sowie an einem seitlich auskragenden Teil (13/1) des Stützbockes (13) jeweils eine Lagerstelle (14 bzw. 15) gegeben ist, zwischen denen das Feder-Dämpfer-Organ (8) vertikal stehend eingespannt ist.

4. Lastkraftwagen nach einem der Ansprüche 2 und 3, dadurch gekennzeichnet, daß der Querabstand der beiden unteren Lagerstellen (9, 11) um ein solches Maß kleiner als der Querabstand der oberen Lagerstellen (10, 12) ist, daß der Tragarm (7) beim Ein- und Ausfedern des Fahrerhauses eine seiner Vertikalbewegung überlagerte leichte Kippbewegung solcher Größe in Querrichtung aufgeprägt bekommt, daß der geringfügige seitliche Versatz des unteren Tragarm-Bereiches (7/1) durch das Kippen des oberen Tragarm-Bereiches (7/2) in Gegenrichtung ausgeglichen wird, mithin die hintere Lagerstelle (1) am Fahrerhaus zusammen mit einem diese erfassenden tragarmseitigen Verschlußgegenstück (17) immer nur vertikale Bewegungen in der Fahrzeuglängsmittelhochebene vollführen kann.

5. Lastkraftwagen nach einem der vorhergehenden Ansprüche, dadurch gekennzeichnet, daß am oberen Ende des Federbeines (2), dort am freien Ende des Querabschnittes (7/2) am galgenförmigen Tragarm (7) oben, und an der hinteren Lagerstelle (1) des Fahrerhauses die Teile eines Verschlusses - einerseits ein Bolzen (16), andrerseits ein lösbarer Verschlußhaken (17) - angeordnet sind, welcher Verschluß das ungekippte Fahrerhaus mit dem Federbein (2) und über dieses mit dem Fahrgestellrahmen (3) in Verbindung hält, nach Öffnung des Verschlußhakens (17) aber das Fahrerhaus für ein Kippen gegenüber dem Fahrgestellrahmen freigibt.

6. Lastkraftwagen nach einem der vorhergehenden Ansprüche, dadurch gekennzeichnet, daß der Tragarm (7) mit dem oberen Teil seines Vertikalabschnittes (7/1) und mit seinem Querabschnitt (7/2) der Kontur des Fahrerhausbodens (19) und dort insbesondere des Motordomes (19/1) angepaßt folgt.

## Claims

1. Truck with a forward-tilting cab resiliently connected to the chassis frame (3) via two front mounts and a rear mount (1) centrally arranged on the cab rear wall and detachably connected to a holder unilaterally braced against the chassis frame via a spring damper organ, characterised in that the holder is designed as a single spring strut (2) composed of a bracket (4), an upper guide rocker (5), a lower guide rocker (6), an upper angular gallows-type support arm (7) and a spring damper organ (8) and that
• the bracket (4) with its lower section (4/1) is supported on and connected to one of the two frame longitudinal members (3/1 or 3/2) and that above said member (3/1 or 3/2) one end of both the lower guide rocker (6) and the upper guide rocker (5) is mounted on the upward-pointing section (4/2) via two mounts (9, 10) spaced some distance apart,
• the gallows-type support arm (7) with its vertical section (7/1) is, via two bearing points (11, 12) correspondingly spaced relative to each other, located on the two transverse guide rockers (5, 6) arranged parallel to each other,
• the cab with its rear mount (1) is, at the upper end of this spring strut (2), detachably connected to the free end of the transverse section (7/2) of the support arm,
• the vertical movements of the spring strut support arm (7) relative to the chassis frame (3) can be limited by means of the spring damper organ fitted between them.

2. Truck according to Claim 1, characterised in that the bracket (4) with its lower section (4/1) is supported on and connected to the outside of one of the two frame longitudinal members (3/1 and 3/2), that, in addition, the upper bearing point (12) of the two bearing points (11, 12) is connected to the support arm (7) and the lower bearing point (9) of the two bearing points (9, 10) is connected to the bracket (4) by means of the spring damper organ (8) diagonally crossing the parallelogram of the guide rockers (5, 6) and that, owing to this type of location, only exactly guided spring compression and rebound movements of the cab with a correspondingly limited stroke are possible.

3. Truck according to Claim 1, characterised in that a support bracket (13) is provided and is, on the inside, supported on and connected to the same frame longitudinal member (3/1 or 3/2) as bracket (4), that, in addition, the upper guide rocker (5) is laterally extended beyond bearing point (12) on the support arm (7) and that a bearing point (14 or 15) is provided on the laterally projecting part (5/1) of the guide rocker (5) and on the laterally projecting part (13/1) of the support bracket (13), between which parts (5/1 and 13/1) the spring damper organ (8) is clamped into place in vertical position.

4. Truck according to one of the Claims 2 and 3, characterised in that the transverse distance between the two lower bearing points (9, 11) is smaller than the transverse distance between the upper bearing points (10, 12) by such a dimension and that during spring compression and rebound actions of the cab a slight tilting movement of such a degree is imparted in transverse direction to the support arm (7) and superimposed on said support arm's (7) vertical movement that the slight lateral offset of the lower support arm area (7/1) is compensated by the tilting action of the upper support arm area (7/2) in the opposite direction, ie that the rear mount (1) on the cab together with a counterpart locking element (17) gripping said bearing point (1) and fitted to the support arm (7) can perform only vertical movements in the vehicle's vertical longitudinal centre plane.

5. Truck according to one of the foregoing Claims, characterised in that at the upper end of the spring strut (2), ie on the upper side of the free end of the transverse section (7/2) on the gallows-type support arm (7) and at the rear mount (1) of the cab, the parts of a lock - a pin (16) on the one hand and a disengageable hook (17) on the other - are arranged, which lock keeps the non-tilted cab connected with the spring strut (2) and, via this, with the chassis frame (3) and, upon disengagement of the locking hook (17), releases the cab for a tilting action relative to the chassis frame.

6. Truck according to one of the foregoing Claims, characterised in that the support arm (7) with the upper part of its vertical section (7/1) and with its transverse section (7/2) is adapted to the contour of the cab floor (19) and especially of the engine dome (19/1).

## Revendications

1. Camion comprenant une cabine du conducteur pouvant basculer vers l'avant, et qui est reliée à ressort au cadre du châssis (3) au moyen de deux paliers antérieurs et d'un palier postérieur (1) disposé au centre arrière de la cabine du conducteur, le palier postérieur (1) étant raccordé de façon amovible à une fixation, qui d'un côté prend appui au moyen d'un organe amortisseur à ressort par rapport au cadre du châssis,
caractérisé en ce que
• la fixation est constituée par une jambe à ressort (2) unique qui se compose d'un support (4), d'une bielle oscillante de guidage supérieure (5), d'une bielle oscillante de guidage inférieure (6), d'un bras de support (7) coudé en haut en forme de girafe et d'un organe amortisseur à ressort (8),
• le support (4) est fixé en appui par sa section inférieure (4/1) sur l'un des deux longerons du châssis (3/1 ou 3/2), et supporte au-dessus de ce dernier sur sa section (4/2) qui se dresse vers le haut au moyen de deux paliers (9, 10) à une certaine distance l'un de l'autre, la bielle oscillante de guidage inférieure (6) et la bielle oscillante de guidage supérieure (5) respectivement à une extrémité,
• sur les deux bielles oscillantes de guidage (5, 6), disposées en travers et parallèlement l'une à l'autre, le bras de support (7) en forme de girafe est articulé par sa section verticale (7/1) au moyen de deux paliers (11, 12) à une distance correspondante l'un de l'autre,
• à l'extrémité supérieure de cette jambe de force à ressort (2), à cet endroit à l'extrémité libre de la section transversale (7/2) du bras de support la cabine du conducteur est raccordée de façon amovible par son palier postérieur (1),
• les mouvements verticaux du bras de support (7) de la jambe à ressort peuvent être limités par rapport au cadre du châssis (3) au moyen de l'organe amortisseur à ressort (8) monté entre eux.

2. Camion selon la revendication 1,
caractérisé en ce que
• le support (4) est fixé en appui par sa section inférieure (4/1) sur le côté extérieur de l'un des longerons du châssis (3/1 ou 3/2),
• le palier supérieur (12) des deux paliers (11, 12) sur le bras de support (7) et le palier (9) des deux paliers (9, 10) sur le support (4) sont reliés par l'organe amortisseur à ressort (8) qui traverse en diagonale le parallélogramme des bielles de guidage (5, 6), et
• du fait de ce type d'articulation ne sont possibles que des mouvements d'enfoncement et de remontée de la suspension exactement guidés de la cabine du conducteur avec une course limitée en conséquence.

3. Camion selon la revendication 1,
caractérisé en ce que
• il est prévu une selle d'appui (13), qui prend appui et se raccorde du côté intérieur sur le même longeron (3/1 ou 3/2) du châssis que le support (4),
• la bielle oscillante de guidage supérieure (5) est prolongée au-delà du palier (12) sur le bras de support (7) latéralement et
• sur la partie (5/1), qui fait saillie latéralement de la bielle oscillante de guidage (5) ainsi que sur une partie (13/1) saillant latéralement de la selle d'appui (13) il y a respectivement un palier (14 ou 15), entre lesquels est serré l'organe amortisseur à ressort (8) placé verticalement.

4. Camion selon l'une des revendications 2 et 3,
caractérisé en ce que
la distance transversale entre les deux paliers inférieurs (9, 11) est inférieure à la distance transversale entre les deux paliers supérieurs (10, 12) d'une quantité telle que le bras de support (7) subisse lors de l'enfoncement et de la remontée de la suspension de la cabine du conducteur un léger mouvement de basculement se superposant à son mouvement vertical d'une amplitude telle dans le sens transversal que le léger décalage latéral de la zone inférieure (7/1) du bras de support soit compensé par le basculement de la zone supérieure (7/2) du bras de support en sens contraire, et que de cette façon le palier postérieur (1) puisse effectuer complètement sur la cabine du conducteur en même temps qu'une contre-pièce de fermeture (17) située du côté du bras de support et qui saisit celui-ci, seulement des mouvements verticaux dans le plan supérieur médian longitudinal du véhicule.

5. Camion selon l'une des revendications précédentes,
caractérisé en ce qu'
à l'extrémité supérieure de la jambe à ressort (2), à l'endroit de l'extrémité libre de la section transversale (7/2) en haut, sur le bras de support (7) en forme de girafe, et sur le palier postérieur (1) de la cabine du conducteur, on dispose des pièces d'une fermeture - d'une part un axe (16), d'autre part un crochet de fermeture (17) amovible - dont la fermeture maintient la cabine du conducteur non basculée en liaison avec la jambe à ressort (2), et au moyen de celle-ci avec le cadre du châssis (3), mais libère après l'ouverture du crochet de fermeture (17) la cabine du conducteur pour qu'elle puisse basculer par rapport au cadre du châssis.

6. Camion selon l'une des revendications précédentes,
caractérisé en ce que
le bras de support (7) fait suite par la partie supérieure de sa section verticale (7/1) et par sa section transversale (7/2) au contour du plancher (19) de la cabine du conducteur et s'adapte à cet endroit en particulier au dôme du moteur (19/1).
